# EUROPÄISCHE PATENTSCHRIFT

(11) **EP 2 177 967 B1**
(45) Veröffentlichungstag und Bekanntmachung des Hinweises auf die Patenterteilung: **12.12.2012**
(21) Anmeldenummer: 09013200.2
(22) Anmeldetag: 20.10.2009
(51) Int. Cl.: G05D 7/00, G01F 1/42, G05D 7/06, G01F 1/36, G01F 1/44

(54) **Volumenstrommessanordnung sowie Volumenstromregler mit einer Volumenstrommessanordnung**
Volume flow measuring device and volume flow regulator with same
Dispositif de mesure du débit volumétrique et régulateur du débit volumétrique doté d'un dispositif de mesure du débit volumétrique

(30) Priorität: 20.10.2008 DE 202008013879 U
(43) Veröffentlichungstag der Anmeldung: 21.04.2010
(73) Patentinhaber: Schneider Elektronik GmbH, 61449 Steinbach (DE)
(72) Erfinder: Bufe, Rainer, 60437 Frankfurt/Main (DE)
(74) Vertreter: Alber, Norbert

(56) Entgegenhaltungen:
- DE-A1- 10 044 659
- DE-A1- 19 537 063
- DE-B1- 2 654 326
- DE-U1-202004 011 877
- US-A- 5 152 181

## Beschreibung

Die Erfindung betrifft eine Volumenstrommessanordnung nach dem Oberbegriff des Anspruchs 1 bzw. des nebengeordneten Anspruchs 2.

Ein weiterer Aspekt der Erfindung betrifft einen mit einer solchen Volumenstrommessanordnung aufgebauten Volumenstromregler.

Die Volumenstrommessanordnung bzw. der mit dieser Volumenmessanordnung aufgebaute Volumenstromregler soll insbesondere in Zu- und Abluftanlagen, die belastete Luft bzw. Fluid führen, eingesetzt werden.

Bekannte Volumenstrommessanordnungen nach dem Wirkdruckverfahren bzw. Differenzdruckverfahren messen den Durchfluss eines Fluids durch eine Rohrleitung mittels einer in der Rohrleitung angeordneten Drosseleinrichtung, die eine Druckdifferenz entsprechend dem Verhältnis des Innendurchmessers der Rohrleitung vor der Drosseleinrichtung und dem kleinsten Strömungsquerschnitt bzw. der engsten durchströmten Fläche an dem Ort der Drosseleinrichtung verursacht. Aus der Druckdifferenz und weiteren messtechnisch relevanten Faktoren, wie dem Geschwindigkeitsprofil des in der Rohrleitung strömenden Fluid, kann der Volumendurchfluss errechnet werden (Dubbel, Taschenbuch für den Maschinenbau, 18. Auflage, Springer-Verlag, Seiten W15 und 16). Solche Messanordnungen können als Drosseleinrichtung, die auch als Staukörper bezeichnet wird, beispielsweise eine Normblende, eine Normdüse oder ein Venturirohr aufweisen. Die Druckentnahme in der Rohrleitung erfolgt mittels wenigstens einem Druckentnahmeloch in der Rohrleitung in der Stelle, an der der Druck erfasst werden soll. Die Druckentnahmeöffnung ist jeweils mit einer offenen Querschnittsfläche bzw. Durchgangsfläche parallel zu der Strömungsrichtung eines Fluids, insbesondere mit korrosiven Bestandteilen belastete Luft, angeordnet. In der Praxis wird eine Druckentnahmestelle, die stromauf des Staukörpers angeordnet ist, als Plus-Druckentnahmestelle bezeichnet und eine Druckentnahmestelle, die stromab des Staukörpers oder an dessen engster Stelle angeordnet ist, wird als Minus-Druckentnahmestelle bezeichnet, weil in der Letzteren ein geringerer Druck bzw. größerer Unterdruck auftritt.

In einem bekannten Volumenstromregler, der eine Volumenstrommessanordnung der vorangehend genannten Art umfasst, ist eine äußere Ringkammer als Plus-Druckentnahme vor einem Einlaufteil einer Venturidüse an einen ringförmigen Abschnitt einer Muffe angeordnet (DE 195 37 063 C2). Die äußere Ringkammer schließt einen Teil der Muffe ein und steht in deren Bereich über Durchgangsbohrungen, die um den Umfang der äußeren Ringkammer gleichmäßig verteilt vorgesehen sind, mit dem Strömungsweg in Verbindung. Zur Minus-Druckentnahme sind ebenfalls mehrere Einzelbohrungen in einer senkrechten Querschnittsebene eines Halsteils des Venturirohrs über dessen Umfang gleichmäßig verteilt angeordnet. Diese Einzelbohrungen verbinden unterschiedliche Strömungsstellen in dem Halsteil mit einer inneren Ringkammer, über die eine Minus-Druckentnahme erfolgt. Der Volumenstromregler, insbesondere das um die Venturidüse angeordnete Messrohrteil, kann aus thermoplastischem Kunststoff bestehen, der aus der Gruppe PVC, PPS und PP ausgewählt sein kann.

Der vorliegenden Erfindung liegt die Aufgabe zugrunde, eine Volumenmessanordnung bzw. einen mit der Volumenmessanordnung ausgestatteten Volumenstromregler so weiterzubilden, dass sie bzw. er einfacher unter Verwendung handelsüblicher Ausgangskomponenten hergestellt werden kann und gleichwohl eine hohe Messgenauigkeit bzw. Regelgenauigkeit erzielt.

Die Volumenstrommessanordnung, mit der die voranstehende Aufgabe unter dem Aspekt der Druckentnahme gelöst wird, zeichnet sich durch eine Kombination der in Anspruch 1 angegebenen Merkmale aus.

Das gemäß dem kennzeichnenden Teil des Anspruchs 1 vorgesehene Druckentnahmerohr, welches wesentlich dünner als der lichte Querschnitt der Rohrleitung bzw. des Messrohrkörpers ist, in dem ein Staukörper angeordnet ist, und sich in einer senkrechten Querschnittsebene in den Messrohrkörper im Wesentlichen über dessen inneren Durchmesser erstreckt, kann bevorzugt als Plus-Druckentnahmestelle und/oder gegebenenfalls als dem Staukörper in Strömungsrichtung nachgeordnete Minus-Druckentnahmestelle jeweils eine äußere Ringkammer bzw. eine innere Ringkammer, in der ein Mittelwert des Unterdrucks entsprechend den Druckverhältnissen an Einzelbohrungen in der jeweiligen Ringkammer erzeugt wird, ersetzen. Der Herstellaufwand für das Druckentnahmerohr, das aus einem Standardrohr gefertigt werden kann, ist gering.

In besonders vorteilhafter Weise kann bei der oben erwähnten Mittelwertbildung des Unterdrucks das Strömungsprofil bzw. Geschwindigkeitsprofil des Fluid in dem Messrohrkörper berücksichtigt werden, um die Messgenauigkeit zu erhöhen, indem nach Anspruch 7 die gegenseitigen Abstände der Druckentnahmelöcher den Mantel des Druckentnahmerohrs jeweils im Wesentlichen proportional den Geschwindigkeitsvektoren des Fluid entlang dem Entnahmerohr bemessen sind. Die Abstände sind also untereinander nicht gleich groß.

Hierzu wird genutzt, dass das Druckentnahmerohr, wie weiter oben erwähnt, in einer senkrechten Querschnittsebene des Messrohrkörpers liegt und sich im Wesentlichen über den inneren Durchmesser des Messrohrkörpers erstreckt, so dass das Geschwindigkeitsprofil erfasst werden kann.

Das Druckentnahmerohr verursacht nur einen geringen Druckverlust in dem Messrohrkörper und geringe Schallpegel, da es gegenüber dem Innendurchmesser des Messrohrkörpers schmal dimensioniert ist.

Weiterhin vorteilhaft wird infolge der Ausformung der Druckentnahmelöcher in dem Mantel des Druckentnahmerohrs mit Durchgangsflächen der Druckentnahmelöcher parallel zur Strömungsrichtung des in dem Messkörper strömenden Fluid, also bei seitlicher Anordnung der Druckentnahmelöcher an dem Druckentnahmerohr, eine Selbstreinigung der Druckentnahmelöcher erzielt, die eine langfristige hohe Messgenauigkeit sichert. Aufwendige konstruktive Maßnahmen, wie aus dem Messrohrköper herausziehbare und einsetzbare Lanzen zur regelmäßige Wartung der Druckentnahmelöcher, können entfallen, weil diese nicht nennenswert verschmutzen.

Unter dem Aspekt des in dem Messrohrkörper angeordneten Staukörpers zeichnet sich die erfindungsgemäße Volumenstrommessanordnung nach Anspruch 2 dadurch aus, dass ein Staukörperrohr als Staukörper innerhalb des Messrohrkörpers in einer Querschnittsebene des Messrohrkörpers angeordnet ist und sich im Wesentlichen über den inneren Durchmesser des Messrohrkörpers erstreckt.

Zur Herstellung des Staurohrkörpers kann ebenfalls herstellungsgünstig ein Standardrohr verwendet werden, welches zum Einsatz als Staukörperrohr bearbeitet wird. Das fertige Staukörperrohr wird ähnlich wie das Druckentnahmerohr in dem Messrohrkörper jedoch an der Minus-Druckentnahmestelle bzw. in deren Nähe angeordnet.

Die Erfindungen gemäß den nebengeordneten Ansprüchen 1 und 2 beruhen daher auf dem gleichen Prinzip mit der Verwendung eines Standardrohrs sowie dessen Ausrichtung in einer Querschnittsfläche des Messrohrkörpers.

Weiterhin vorteilhaft ist, dass das Staukörperrohr nur eine geringe Anströmstrecke stromauf in dem Messrohrkörper sowie nur eine geringe Abströmstrecke stromab in dem Messrohrkörper erfordert. Insbesondere treten keine die Messung verfälschenden sogenannten toten Zonen stromauf des Staukörpers auf, wie sie sonst z.B. bei einer Venturidüse als Staukörper in ungünstiger Konfiguration, nämlich geringer Anströmstrecke, vorkommen können.

Ebenso wie bei dem Druckentnahmerohr ist der durch das Staukörperrohr erzeugte Schallpegel benutzerfreundlich gering.

Gemäß Anspruch 3 ist der Außendurchmesser des Staukörperrohrs größer als der Außendurchmesser des Druckentnahmerohrs, wobei der Außendurchmesser des Druckentnahmerohrs unkritisch ist. Der Außendurchmesser des Staukörperrohrs kann entsprechend einem gegebenen Innendurchmesser des Messrohrkörpers einfach ausgewählt werden bzw. mit einem vorgesehenen Innendurchmesser des Messrohrkörpers abgeglichen werden, da beide in die mathematische Beziehung eingehen, aus der der Volumenstrom errechnet wird.

Für das Druckentnahmerohr nach Anspruch 1, welches nur zur Druckentnahme insbesondere an der Plus-Druckentnahmestelle vorgesehen ist, genügt typisch ein Durchmesser von 7mm.

Die vorstehend für das Druckentnahmerohr sowie das Staukörperrohr angegebenen Vorteile werden kumuliert erreicht, wenn gemäß Anspruch 4 besonders einfach das Staukörperrohr als kombiniertes Staukörper-/Druckentnahmerohr mit längs einer Reihe seitlich ausgeformten Druckentnahmelöchern ausgebildet ist, wobei die Reihe wiederum in axialer Richtung des Staukörper-/Druckentnahmerohrs verläuft. Sowohl bei dem Druckentnahmerohr als auch bei dem kombinierten Staukörper-/Druckentnahmerohr kann der Druckabgriff einfach direkt an einem Rohrende erfolgen.

Das Druckentnahmerohr, das Staukörperrohr und gegebenenfalls das kombinierte Staukörper-/Druckentnahmerohr können in vielfältiger Weise miteinander kombiniert werden, gegebenenfalls auch mit anderen Druckentnahmeeinrichtungen und/oder Staukörpern.

In bevorzugter Weise ist nach Anspruch 5 in dem Messrohrkörper ein Druckentnahmerohr stromauf eines kombinierten Staukörper-/Druckentahmerohrs angeordnet, dessen Durchmesser größer als derjenige des Druckentnahmerohrs ist. In diesem Fall können also die beiden wesentlichen Komponenten der Volumenstrommessanordnung nach dem Differenzdruckprinzip herstellungsgünstig aus Standardrohren unterschiedlichen Durchmessers gefertigt werden.

Beispielsweise können nach Anspruch 6 an der Plus-Druckentnahmestelle die Druckentnahmelöcher einfach in dem Mantel des Druckentnahmerohrs ausgeformt sein, während an der Minus-Druckentnahmestelle die Druckentnahmelöcher in einer Außenwand des Staukörpers ausgebildet sind und mit einem Hohlraum in dem Staukörper in Verbindung stehen. Damit lassen sich unterschiedliche Staukörper in dem Messrohrkörper der Volumenstrommessanordnung einsetzen, die wenig Verwirbelungen und Druckverlust hervorrufen, einen kleinen Schallpegel erzeugen und keine große Anströmstrecke erfordern, wie z.B. ein tropfenförmiger Staukörper nach Anspruch 9 oder ein als Hohlkugel geformter Staukörper nach Anspruch 10 oder ein hohles Ellipsoid nach Anspruch 11 oder eine hohle Tragfläche nach Anspruch 12.

Gemäß Anspruch 13 können die vorgenannten Staukörper bzw. deren Wände selbst mit seitlich angeordneten Druckentnahmelöchern versehen sein, welche die Minus-Druckentnahmestelle bilden. In jeweils einem der hohlen Staukörper wird ein Mittelwert des Unterdrucks entsprechend den Druckverhältnissen an den einzelnen Druckentnahmelöchern gebildet.

Bei der Anordnung der Druckentnahmelöcher in der Wand des hohlen Staukörpers kann eine auf dem Messrohrkörper sonst angeordnete Ringkammer mit Durchgangslöchern entfallen.

Eine seitliche Anordnung der Druckentnahmelöcher an dem Staukörper nach Anspruch 13 bedeutet auch in diesem Fall, dass die Druckentnahmelöcher durch die Luft bzw. das Fluid, welches in die Messrohrkörper strömt, seitlich angeströmt werden, so dass die Druckentnahmelöcher verschmutzungs- und wartungsfrei sind.

Die erfindungsgemäßen Volumenstrommessanordnungen sind hinsichtlich der Auswahl der Materialien, aus denen sie gefertigt sind, wenig limitiert:

Es eignet sich beispielsweise nach Anspruch 14 Kunststoff, insbesondere schwer entflammbares Polypropylen.

Alternativ kann die Volumenstrommessanordnung nach Anspruch 15 aus verzinktem Stahl bestehen oder nach Anspruch 16 aus V4A bestehen.

Wesentlich ist bei allen obigen Materialien, dass diese durch aggressive Bestandteile in dem durch die Volumenstrommessanordnung geleiteten Fluide, insbesondere Luft, nicht angegriffen werden.

Ein nach einem weiteren Aspekt der Erfindung mit einer Volumenstrommessanordnung der vorstehend erörterten Ausführungsformen aufgebauter Volumenstromregler zeichnet sich durch die Vorteile der eingesetzten Volumenstrommessanordnung aus, insbesondere einen geringen Herstellaufwand, und bietet eine hohe Regelgenauigkeit des Volumenstroms, der durch den Volumenstromregler strömt.

Der entsprechende Volumenstromregler nach Anspruch 17 mit einer Volumenstrommessanordnung der oben angegebenen Art bildet mit dieser eine Baugruppe, in der sich an den Messrohrkörper in Strömungsrichtung ein Reglerrohrkörper insbesondere gleichachsig anschließt. In dem Reglerrohrkörper ist eine Stellklappe gelagert, die durch einen Stellantrieb verstellbar ist. Der Stellantrieb wird mit einer Regeleinheit gesteuert, deren Eingang über einen Differenzdruckumformer mit den Druckentnahmelöchern der Plus-Druckentnahme und der Minus-Druckentnahme in Drucksignal leitender Verbindung steht. Das Signal, das zu dem Eingang der Regeleinheit geleitet wird, stellt den Istwert dar, der auf einen an der Regeleinheit voreingestellten Sollwert eingeregelt wird.

Ausführungsbeispiele einer Volumenstrommessanordnung gemäß der Erfindung, die mit einem wesentlichen Teil eines Volumenstromreglers eine Baugruppe bildet, werden nachfolgend in der Zeichnung mit fünf Figuren erläutert, woraus sich vorteilhafte Einzelheiten der Erfindung ergeben können. Es zeigt:
- Figur 1: eine erste Ausführungsform in einer ersten Seitenansicht mit Details in einer zweiten, gegenüber der ersten Seitenansicht um 90° gedrehten Seitenansicht, die mit unterbrochenen Linien dargestellt ist,
- Figur 2: eine Ansicht auf die erste Ausführungsform in Luftrichtung bzw. Strömungsrichtung,
- Figur 3: eine zweite Ausführungsform in einer ersten Seitenansicht mit Details in einer zweiten, gegenüber der ersten Seitenansicht um 90° gedrehten Seitenansicht, die mit unterbrochenen Linien dargestellt ist,
- Figur 4: eine Ansicht auf die zweite Ausführungsform in Luftrichtung bzw. Strömungsrichtung und
- Figur 5: eine dritte Ausführungsform in einer Seitenansicht.

In den Figuren sind übereinstimmende Teile mit gleichen Bezugszeichen versehen.

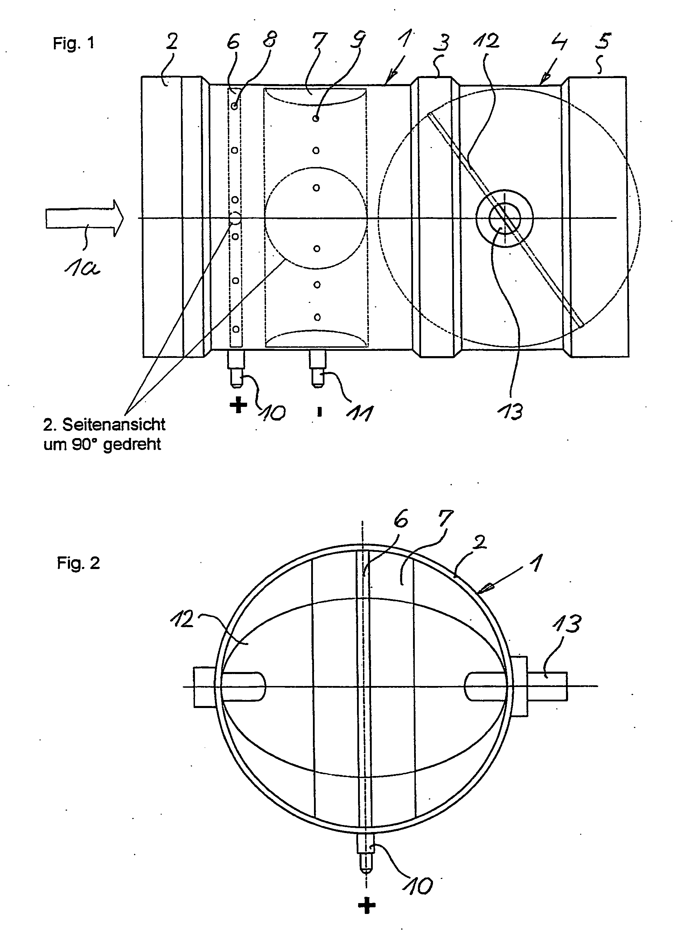

In Figur 1 ist mit 1 ein Messrohrkörper bezeichnet, an dessen einem Ende eine Muffe 2 zum Einbau in ein Rohrsystem angeordnet ist, und an seinem entgegengesetzten Ende eine Anbindung 3 zur gleichachsigen Verbindung mit einem Stellklappenrohrkörper 4 aufweist. An dem zu der Anbindung 3 entgegengesetzten Ende des Stellklappenrohrkörpers ist eine zweite Muffe 5 zum Anschluss an das Rohrsystem vorgesehen. - In anderen Ausführungsformen kann statt der ersten Muffe 2 und/oder der zweiten Muffe 5 jeweils ein Flansch zum Einbau in das Rohrsystem vorhanden sein.

Im Inneren des Messrohrkörpers 1 sind in Luftrichtung bzw. Strömungsrichtung 1a jeweils in einer Querschnittsebene ein Druckentnahmerohr 6 sowie ein kombiniertes Staukörper-/Druckentnahmerohr 7 angeordnet. Das Druckentnahmerohr 6 und das Druckentnahme-/Staukörperrohr 7 erstrecken sich über den lichten Innendurchmesser des Messkörperrohrs 1.

Seitlich in dem Druckentnahmerohr 6 und in dem Druckentnahme-/Staukörperrohr 7 ist jeweils mindestens eine Reihe Druckentnahmelöcher 8 bzw. 9 in dem Mantel des Druckentnahmerohrs 6 bzw. Druckentnahme-/Staukörperrohrs 7 ausgeformt. Somit kann eine weitere Reihe auf der Seite des Druckentnahmerohrs 6 bzw. Druckentnahme-/Staukörperrohrs 7 angeordnet sein, die der in der Zeichnung erkennbaren Reihe außen gegenüber liegt. Hingegen schließt die seitliche Anordnung der Druckentnahmelöcher 8 bzw. 9 aus, dass diese in Luftrichtung bzw. Strömungsrichtung gesehen auf der Stirnseite des Druckentnahmerohrs 6 bzw. Druckentnahme-/Staukörperrohrs 7 ausgeformt sind, die in Figur 2 sichtbar ist, oder auf der der Stirnseite jeweils außen gegenüberliegenden Rückseite des Druckentnahmerohrs 6 bzw. Druckentnahme-/Staukörperrohrs 7. Damit wird erreicht, dass die Druckentnahmelöcher 9 und 10 durch belastetes Fluid bzw. Luft, welches bzw. welche den Messrohrkörper 1 durchströmt, seitlich angeströmt werden und daher nicht verschmutzen, sondern wartungsfrei sind.

Zur Messung des Volumenstroms hat das Druckentnahmerohr im Wesentlichen eine die Einzeldrücke an den Druckentnahmelöchern 8 bzw. 9 ausgleichende bzw. Mittelwert bildende Funktion, wobei der gemittelte Druck jeweils an einem Druckentnahmeanschluss 10 bzw. 11 ansteht, der mit dem Innern des Druckentnahmerohrs 6 bzw. Druckentnahme-/Staukörperrohrs 7 in Verbindung steht.

Das Druckentnahme-/Staukörperrohr 7 hat außer zur Druckentnahme eine Staufunktion für das den Messrohrkörper 1 durchströmende Fluid bzw. die Luft, indem es eine Verengung der Durchströmfläche in dem Messrohrkörper 1 darstellt.

Demzufolge ist der Druck an dem Druckentnahmeanschluss 11 niedriger als der Druck an dem Druckentnahmeanschluss 10 einer Plus-Druckentnahmestelle. Der Druckentnahmeanschluss 11 gehört somit zu einer Minus-Druckentnahmestelle.

Um die unterschiedlichen Drücke an der Plus-Druckentnahmestelle 10 und an der Minus-Druckentnahmestelle 11 zu erzeugen, aus denen der Differenzdruck ermittelt werden kann, der ein Maß für den Volumenstrom ist, weicht das Druckentnahme-/Staukörperrohr einen größeren Durchmesser auf als das Druckentnahmerohr 6, welches, wie erwähnt, einen typischen Durchmesser von 7mm aufweisen kann. Der Durchmesser des Druckentnahme-/Staukörperrohrs 7 in typischer Relation zu dem lichten Querschnitt des Messrohrkörpers 1 und dem Außendurchmesser des Druckentnahmerohrs 6 ergibt sich aus Figur 2 der Zeichnung.

Wie aus der zweiten, um 90° gedrehten Seitenansicht in Figur 1 ersichtlich, sind die Querschnitte des Druckentnahmerohrs 6 und des Druckentnahme-/Staukörperrohrs 7 kreisflächenförmig.

In den Figuren 1 und 2 sind weitere Bestandteile eines Volumenstromreglers vereinfachend dargestellt, zu dem die oben beschriebene Volumenstrommessanordnung gehört: In dem an das Messkörperrohr 1 gleichachsig angebundenen Stellklappenrohrkörper 4 ist eine Stellklappe bzw. Drosselklappe 12 mit einer Drosselklappenachse 13 gelagert, an der ein nicht dargestellter Stellantrieb angreift. Die Drosselklappe 12 ist in einer etwa halb geöffneten Stellung gezeigt. Der im Übrigen nicht dargestellte Volumenstromregler umfasst außer dem Stellantrieb der Stellklappe eine nicht gezeigte Regeleinheit, mit der der Stellantrieb gesteuert wird. Ein Eingang der Regeleinheit steht über einen nicht gezeigten Differenzdruckumformer und die Druckentnahmeanschlüsse 10 und 11 mit den Druckentnahmelöchern 8 und 9 der Plus-Druckaufnahme und der Minus-Druckaufnahme in Drucksignal leitender Verbindung.

Damit kann der Volumenstrom, der den Messrohrkörper 1 und anschließend den Stellklappenrohrkörper 4 durchströmt, auf einen vorgegebenen Sollwert eingeregelt werden.

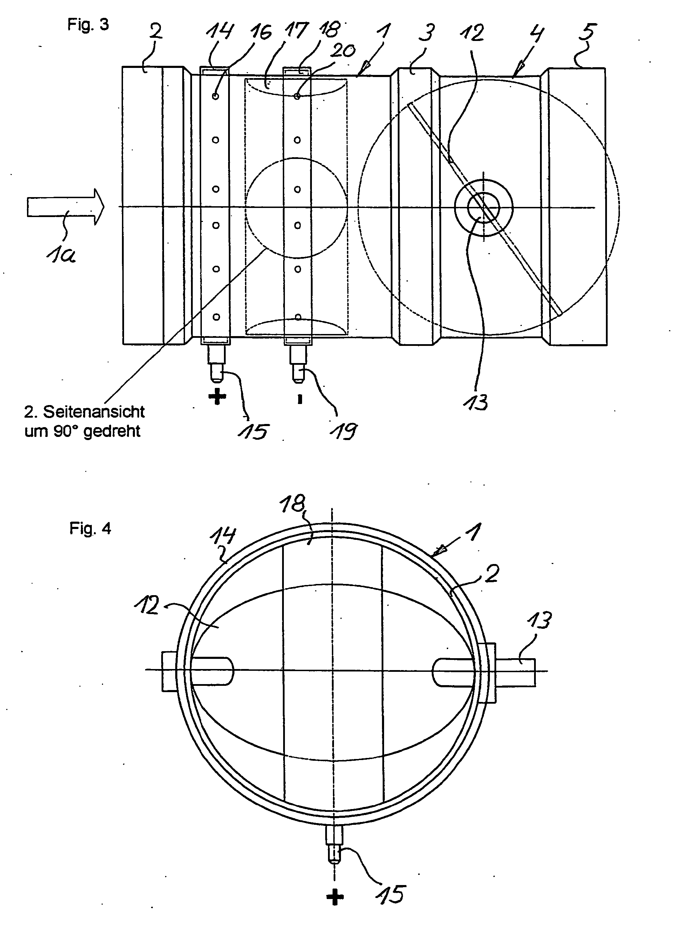

Die zweite Ausführungsform der Volumenstrommessanordnung in einem Volumenstromregler gemäß den Figuren 3 und 4 unterscheidet sich von der oben besprochenen bevorzugten Ausführungsform gemäß den Figuren 1 und 2 in Folgendem:

Statt des ersten Druckentnahmerohrs 6 an der Plus-Druckentnahmestelle ist um den Messrohrkörper 1 eine erste Ringkammer 14 mit einem Druckentnahmeanschluss 15 angeordnet. Die Ringkammer 14 steht über Druckentnahmelöcher 16, die längs des Umfangs einer Wand des Messrohrkörpers 1 angeordnet sind, mit dem Innern des Messrohrkörpers 1 in Verbindung. Hierzu kann die erste Ringkammer 14 Durchgangslöcher aufweisen, die die Druckentnahmelöcher 16 in der Wand des Messrohrkörpers 1 überdecken. In der Zeichnung sind nur die Druckentnahmelöcher 16 bezeichnet. Die Druckentnahmelöcher 16 sind wiederum im Wesentlichen parallel zur axialen Richtung des Messrohrkörpers bzw. zur Strömungsrichtung 1 a angeordnet, so dass sie seitlich angeströmt werden.

Weiterhin ist in der zweiten Ausführungsform das kombinierte Druckentnahme-/Staukörperrohr 7 der ersten Ausführungsform ersetzt durch ein Staukörperrohr 17 an der gleichen Stelle in dem Messkörperrohr 1 sowie durch eine zweite Ringkammer 18 um den Messrohrkörper 1 an der nicht bezeichneten Minus-Druckentnahmestelle. Die zweite Ringkammer 18 weist wiederum einen Druckentnahmeanschluss 19 auf. Die zweite Ringkammer 18 überdeckt, im Prinzip wie die erste Ringkammer 14, eine Reihe Druckentnahmelöcher 20, die in einer Reihe in Umfangsrichtung in der Wand des Messrohrkörpers 1 ausgeformt sind, so dass das Innere der zweiten Ringkammer 18 über die Druckentnahmelöcher 20 und gegebenenfalls Durchgangslöcher in der ersten Ringkammer mit dem Inneren des Messrohrkörpers 1 Druck leitend verbunden ist.

Das Staukörperrohr 1 7 weist im Unterschied zu dem Druckentnahme-/Staukörperrohr 7 der ersten Ausführungsform keine Druckentnahmelöcher auf. Bei Durchströmen der zweiten Ausführungsform der Volumenstrommessanordnung in Strömungsrichtung 1a entsteht wie bei der ersten Ausführungsform durch die Wirkung des Staukörperrohrs 7 in der ersten Ringkammer 14 ein relativ größerer Druck, der aus den Einzeldrücken an den Druckentnahmelöchern 16 gemittelt ist, als der Druck in der zweiten Ringkammer 18, der aus den Einzeldrücken an den Druckentnahmelöchern 20 gemittelt ist. Die somit an den Druckentnahmeanschlüssen 15 und 19 entnehmbaren Drücke können wiederum zur Bestimmung des Volumenstroms ausgewertet werden und als Istwert einer nicht dargestellten Regeleinheit des Volumenstromreglers zugeführt werden, der die Stellklappe 12 entsprechend einem vorgegebenen Sollwert einstellt..

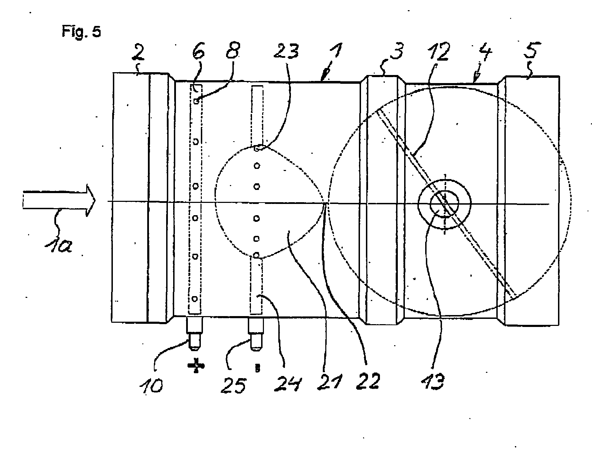

Die dritte Ausführungsform der Volumenstrommessanordnung gemäß Figur 5 weist an der Plus-Druckentnahmestelle ein Druckentnahmerohr 6 mit Druckentnahmeanschluss 10 wie die erste Ausführungsform auf.

Der Staukörper 21 der dritten Ausführungsform ist hingegen hohl tropfenförmig rotationssymmetrisch zu einer virtuellen mittleren Längsachse 22 des Messkörperrohrs 1 geformt und in dem Messrohrkörper 1 angeordnet. In der größten Querschnittsebene des tropfenförmigen Staukörpers sind um dessen Umfang in einer Reihe Druckentnahmelöcher 23 ausgeformt, deren Durchgangsflächen zwischen dem Inneren des Messrohrkörpers 1 und dem Inneren des Staukörpers 21 somit parallel zu der Längsachse 22 und zu der Strömungsrichtung 1a des Fluid orientiert sind, so dass sie durch das Fluid seitlich bzw. tangential angeströmt werden und demzufolge im Betrieb der Volumenstrommessanordnung nicht verschmutzen.

Das Innere des Staukörpers 21 ist über ein Rohr 24 mit dem Druckentnahmeanschluss 25 verbunden, so dass die Druckentnahmelöcher 23 zusammen mit dem Druckentnahmeanschluss 25 die Minus-Druckentnahmestelle bilden, die hier vorteilhafterweise an der engsten bzw. kleinsten Strömungsdurchgangsfläche in dem Messrohrkörper 1 positioniert ist.

Die in dem Messrohrkörper 1 angeordnete Volumenstrommessanordnung ist wie bei der ersten Ausführungsform und der zweiten Ausführungsform zu einer Baugruppe eines Volumenstromreglers mit einem Stellklappenrohrkörper 4, der fluchtend an dem Messrohrkörper 1 angebracht ist und im Wesentlichen die Stellklappe 12 des Volumenstromreglers beinhaltet, ergänzt.

### Bezugszahlenliste

- 1: Messrohrkörper
- 1 a: Strömungsrichtung
- 2: erste Muffe
- 3: Anbindung
- 4: Stellklappenrohrkörper
- 5: zweite Muffe
- 6: Druckentnahmerohr
- 7: Druckentnahme-Staukörperrohr
- 8: Druckentnahmeloch
- 9: Druckentnahmeloch
- 10: Druckentnahmeanschluss
- 11: Druckentnahmeanschluss
- 12: Stellklappe
- 13: Drosselklappenachse
- 14: erste Ringkammer
- 15: Druckentnahmeanschluss
- 16: Druckentnahmelöcher
- 17: Staukörperrohr
- 18: zweite Ringkammer
- 19: Druckentnahmeanschluss
- 20: Druckentnahmelöcher
- 21: Staukörper (tropfenförmig)
- 22: Längsachse
- 23: Druckentnahmeloch
- 24: Rohr
- 25: Druckentnahmeanschluss

## Patentansprüche

1. Volumenstrommessanordnung nach dem Differenzdruckprinzip mit einem in einem Messrohrkörper (1) angeordneten Staukörper (7, 17, 21), mit einer in Strömungsrichtung (1a) stromauf des Staukörpers (7, 17, 21) angeordneten Plus-Druckentnahmestelle und einer in dem bzw. um den Staukörper (7, 17, 21) bzw. stromab des Staukörpers angeordneten Minus-Druckentnahmestelle, wobei die Druckentnahmestellen Druckentnahmelöcher (8, 9, 16, 20, 23) mit Durchgangsflächen im Wesentlichen parallel zur axialen Richtung des Messrohrköpers (1) aufweisen,
**dadurch gekennzeichnet,**
**dass** als Plus-Druckentnahmestelle und/oder Minus-Druckentnahmestelle je ein Druckentnahmerohr (6) innerhalb des Messrohrkörpers (1) in jeweils einer Querschnittsebene des Messrohrkörpers (1) angeordnet ist und sich im Wesentlichen über den inneren Durchmesser des Messrohrkörpers (1) erstreckt und
**dass** in dem Mantel des Druckentnahmerohrs (6) eine in axialer Richtung des Druckentnahmerohrs (1) verlaufende Reihe seitlicher Druckentnahmelöcher (8) ausgeformt sind.

2. Volumenstrommessanordnung nach Anspruch 1,
**dadurch gekennzeichnet,**
**dass** ein Staukörperrohr (7, 17) als Staukörper innerhalb des Messrohrkörpers (1) in einer Querschnittsebene des Messrohrkörpers (1) angeordnet ist und sich im Wesentlichen über den inneren Durchmesser des Messrohrkörpers (1) erstreckt.

3. Volumenmessanordnung nach den Ansprüchen 1 und 2,
**dadurch gekennzeichnet,**
**dass** der Durchmesser des Staukörperrohrs (7, 17) größer ist als der Durchmesser des Druckentnahmerohrs (6).

4. Volumenmessanordnung nach den Ansprüchen 1 und 2,
**dadurch gekennzeichnet,**
**dass** das Staukörperrohr als kombiniertes Staukörper-/Druckentnahmerohr (7) mit längs einer in seiner axialen Richtung verlaufende Reihe seitlich ausgeformten Druckentnahmelöchern (9) ausgebildet ist.

5. Volumenmessanordnung nach den Ansprüchen 1 - 4,
**dadurch gekennzeichnet,**
**dass** in dem Messrohrkörper (1) ein Druckentnahmerohr (6) stromauf eines kombinierten Staukörper-/Druckentnahmerohrs (7) angeordnet ist, dessen Durchmesser größer als derjenige des Druckentnahmerohrs (6) ist.

6. Volumenstrommessanordnung nach Anspruch 1,
**dadurch gekennzeichnet,**
**dass** an der Plus-Druckentnahmestelle die Druckentnahmelöcher (8) in dem Mantel des Druckentnahmerohrs (6) ausgeformt sind und
**dass** an der Minus-Druckentnahmestelle die Druckentnahmelöcher (23) in einer Außenwand des Staukörpers (21) ausgebildet sind und mit einem Hohlraum in dem Staukörper (21) in Verbindung stehen.

7. Volumenstrommessanordnung nach einem der vorangehenden Ansprüche,
**dadurch gekennzeichnet,**
**dass** die gegenseitigen Abstände der Druckentnahmelöcher (8, 9) in dem Mantel des Druckentnahmerohrs (6) bzw. des kombinierten Staukörper-/Druckentnahmerohrs (7) im Wesentlichen proportional den Geschwindigkeitsvektoren des Fluid entlang dem Druckentnahmerohr (6) bzw. dem kombinierten Staukörper-/Druckentnahmerohr (7) bemessen sind.

8. Volumenstrommessanordnung nach einem der vorangehenden Ansprüche,
**dadurch gekennzeichnet,**
**dass** an wenigstens einer der Druckentnahmestellen die Druckentnahmelöcher (16, 20) in einer Wand des Messrohrkörpers (1) ausgebildet sind und mit dem Inneren einer auf dem Messrohrkörper (1) angeordneten Ringkammer (14, 18) in Verbindung stehen.

9. Volumenstrommessanordnung nach einem der Ansprüche 1, 6 und 8,
**dadurch gekennzeichnet,**
**dass** der Staukörper (21) tropfenförmig und hohl ausgebildet ist und in dem Messrohrkörper (1) zentral angeordnet ist.

10. Volumenstrommessanordnung nach einem der Ansprüche 1, 6 und 8,
**dadurch gekennzeichnet,**
**dass** der Staukörper als Hohlkugel geformt ist und in dem Messrohrkörper (1) zentral angeordnet ist.

11. Volumenstrommessanordnung nach einem der Ansprüche 1, 6 und 8,
**dadurch gekennzeichnet,**
**dass** der Staukörper als hohles Ellipsoid geformt ist und in dem Messrohrkörper (1) zentral angeordnet ist.

12. Volumenstrommessanordnung nach einem der Ansprüche 1, 6 und 8,
**dadurch gekennzeichnet,**
**dass** der Staukörper als hohle Tragfläche in dem Messrohrkörper (1) ausgebildet ist.

13. Volumenstrommessanordnung nach einem der Ansprüche 9 - 12,
**dadurch gekennzeichnet,**
**dass** die Druckentnahmelöcher (23) seitlich in der Wand des hohlen Staukörpers (21) ausgebildet sind.

14. Volumenstrommessanordnung nach einem der vorangehenden Ansprüche,
**dadurch gekennzeichnet,**
**dass** sie aus Kunststoff, insbesondere schwer entflammbaren Polypropylenen besteht.

15. Volumenstrommessanordnung nach einem der Ansprüche 1 - 13,
**dadurch gekennzeichnet,**
**dass** sie aus verzinktem Stahl besteht.

16. Volumenstrommessanordnung nach einem der Ansprüche 1 - 13,
**dadurch gekennzeichnet,**
**dass** sie aus V4A besteht.

17. Volumenstromregler mit einer Volumenstrommessanordnung nach einem der vorangehenden Ansprüche in einer Baugruppe, in der sich an den Messrohrkörper (1) in Strömungsrichtung ein Stellklappenrohrkörper (4) insbesondere gleichachsig anschließt,
wobei in dem Stellklappenrohrkörper (4) eine Stellklappe (12) gelagert ist und
wobei ein Stellantrieb der Stellklappe (12) mit einer Regeleinheit steuerbar ist, deren Eingang über einen Differenzdruckumformer mit den Druckentnahmelöchern (8, 9, 16, 20, 23) der Plus-Druckentnahme und der Minus-Druckentnahme in Drucksignal leitender Verbindung steht.

## Claims

1. A volume flow measuring arrangement according to a differential pressure principle comprising a resistance element (7, 17, 21) arranged in a measuring tube element (1); a positive pressure tapping location arranged in a flow direction (1 a) upstream of the resistance element (7, 17, 21) and a negative pressure tapping location arranged in the resistance element (7, 17, 21) or about the resistance element or downstream of the resistance element, wherein the pressure tapping locations include pressure tapping boreholes (8, 9, 16, 20, 23) with pass-through surfaces that are substantially parallel to an axial direction of the measuring tube element (1), wherein a respective pressure tapping tube (6) is arranged as a positive pressure tapping location and/or a negative pressure tapping location within the measuring tube element (1) in a respective cross-sectional plane of the measuring tube element (1) and wherein the pressure tapping tube (6) substantially extends over the inner diameter of the measuring tube element (1) and a row of lateral pressure tapping boreholes (8) is formed in a jacket of the pressure tapping tube (6), wherein the row extends in axial direction of the pressure tapping tube (1).

2. The volume flow measuring arrangement according to claim 1, wherein a resistance element tube (7, 17) is arranged as a resistance element within the measuring tube element (1) in a cross-sectional plane of the measuring tube element and extends essentially over an inner diameter of the measuring tube element (1).

3. The volume flow measuring arrangement according to claims 1 and 2, wherein the diameter of the resistance element tube (7, 17) is greater than the diameter of the pressure tapping tube (6).

4. The volume flow measuring arrangement according to claims 1 and 2, wherein the resistance element tube is provided as a combined resistance element- / pressure tapping- tube (7) with a row of laterally formed pressure tapping boreholes (9) extending along an axial direction of the combined resistance element- / pressure tapping- tube (7).

5. The volume flow measuring arrangement according to claims 1 through 4, wherein a pressure tapping tube (6) is arranged in the measuring tube element (1) upstream of a combined pressure element- / pressure tapping- tube (7), whose diameter is greater than a diameter of the pressure tapping tube (6).

6. The volume flow measuring arrangement according to claim 1, wherein the pressure tapping boreholes (8) are arranged at the positive pressure tapping location in a jacket of the pressure tapping tube (6) and wherein the pressure tapping holes (23) are provided at the negative pressure tapping location in an outer wall of the resistance element (21) and are connected with a cavity in the resistance element (21).

7. The volume flow measuring arrangement according to one of the preceding claims, wherein distances between the pressure tapping holes (8, 9) in the jacket of the pressure tapping tube (6) or of the combined resistance element- / pressure tapping-tube (7) are essentially sized proportional to the velocity vectors of the fluid along the pressure tapping tube (6) or the combined resistance element- / pressure tapping- tube (7).

8. The volume flow measuring arrangement according to one of the preceding claims, wherein at least at one of the pressure tapping locations, the pressure tapping holes (16, 20) are configured in a wall of the measuring element (11) and are connected with an interior of an annular chamber (14, 18) arranged on the measuring tube element (1).

9. The volume flow measuring arrangement according to one of the claims 1, 6 and 8, wherein the resistance element (21) is configured drop shaped and hollow and centrally arranged in the measuring tube element (1).

10. The volume flow measuring arrangement according to one of the claims 1, 6, and 8, wherein the resistance element is formed as a hollow sphere and centrally arranged in the measuring tube element (1).

11. The volume flow measuring arrangement according to one of the clams 1, 6, and 8, wherein the resistance element is formed as a hollow ellipsoid and centrally arranged in the measuring tube element (1).

12. The volume flow measuring arrangement according to one of the claims 1, 6 and 8, wherein the resistance element is formed as a hollow wing in the measuring tube element (1).

13. The volume flow measuring arrangement according to one of the claims 9 through 12, wherein the pressure tapping holes (23) are laterally arranged in the wall of the hollow resistance element (21).

14. The volume flow measuring arrangement according to one of the preceding claims, wherein the volume measuring arrangement is made from plastic material, in particular flame resistant polypropylene.

15. The volume flow measuring arrangement according to one of the claims 1 through 13, wherein the volume flow measuring arrangement is made from zinc-plated steel.

16. The volume flow measuring arrangement according to one of the claims 1 through 13, wherein the volume flow measuring arrangement is made from V4A.

17. A volume flow regulator with a volume flow measuring arrangement according to one of the preceding claims in an assembly in which a butterfly tube element (4) adjoins the measuring tube element (1) in flow direction, in particular in a concentric manner, wherein a butterfly (12) is supported in the butterfly tube element (4) and wherein an actuator of the butterfly (12) is controllable through a regulating unit whose input is pressure signal connected through a differential pressure converter with the pressure tapping holes (8, 9, 16, 20, 23) of the positive pressure tapping location and the negative pressure tapping location.

## Revendications

1. Dispositif de mesure du débit volumétrique selon le principe de pression différentielle avec un corps de retenue (1) disposé dans un corps tubulaire de mesure (7, 17, 21), équipé d'un point de prise de pression plus disposé dans le sens d'écoulement (1 a) en amont du corps de retenue (7, 17, 21) respectivement un point de prélèvement de pression moins disposé en aval du corps de retenue (7, 17, 21), les points de prise de pression présentant des orifices de prise de pression (8, 9, 16, 20, 23) avec des surfaces de passage sensiblement parallèles à la direction axiale du corps tubulaire de mesure (1), **caractérisé en ce qu'**en tant que point de prise de pression plus et/ou point de prise de pression moins, il est prévu respectivement un tube de prise de pression (6) à l'intérieur du corps tubulaire de mesure (1) dans respectivement un plan de section transversale du corps tubulaire de mesure (1) et qui s'étend sensiblement au-dessus du diamètre interne du corps tubulaire de mesure (1) et
**en ce que** dans l'enveloppe du tube de prise de pression (6) est ménagée une série d'orifices de prise de pression (8) latéraux s'étendant dans la direction axiale du corps tubulaire de mesure (1).

2. Dispositif de mesure du débit volumétrique selon la revendication 1, **caractérisé en ce qu'**
un corps de retenue tubulaire (7, 17) est disposé en tant que corps de retenue dans son plan de section transversale du corps tubulaire de mesure (1) à l'intérieur du corps tubulaire de mesure (1) et s'étend sensiblement au-dessus du diamètre interne du corps tubulaire de mesure (1).

3. Dispositif de mesure du débit volumétrique selon les revendications 1 et 2, **caractérisé en ce que**
le diamètre du corps de retenue tubulaire (7, 17) est supérieur au diamètre du tube de prise de pression (6).

4. Dispositif de mesure du débit volumétrique selon les revendications 1 et 2, **caractérisé en ce que** le corps de retenue tubulaire est réalisé comme un corps de retenue et de prise de pression combiné tubulaire (7) avec une série s'étendant dans sa direction axiale d'orifices de prise de pression (9) ménagés latéralement.

5. Dispositif de mesure du débit volumétrique selon les revendications 1 à 4, **caractérisé en ce que** dans le corps tubulaire de mesure (1), il est prévu un tube de prise de pression (6) en amont d'un corps de retenue et de prise de pression combiné tubulaire (7) dont le diamètre est supérieur à celui du tube de prise de pression (6).

6. Dispositif de mesure du débit volumétrique selon la revendication 1, **caractérisé en ce qu'**il est moulé sur le
point de prise de pression plus les orifices de prise de pression dans l'enveloppe du tube de prise de pression (6) et **en ce qu'**il est ménagé sur le point de prise de pression moins, les orifices de prise de pression (23) dans une paroi externe du corps de retenue (21) lesquels sont reliés à une cavité dans le corps de retenue (21).

7. Dispositif de mesure du débit volumétrique selon l'une des revendications précédentes, **caractérisé en ce que** les distances réciproques des orifices de prise de pression (8, 9) sont dimensionnées dans l'enveloppe du tube de prise de pression (6) respectivement du corps de retenue et de prise de pression combiné tubulaire (7) sensiblement de manière proportionnelle aux vecteurs de vitesse du fluide le long du tube de prise de pression (6) respectivement du corps de retenue et de prise de pression combiné tubulaire (7).

8. Dispositif de mesure du débit volumétrique selon l'une des revendications précédentes, **caractérisé en ce que** sur au moins un des points de prise de pression, les orifices de prise de pression (16, 20) sont ménagés dans une paroi du corps tubulaire de mesure (1) et sont reliés à l'intérieur d'une chambre annulaire (14, 18) disposée sur le corps tubulaire de mesure (1).

9. Dispositif de mesure du débit volumétrique selon les revendications 1, 6 et 8, **caractérisé en ce que** le corps de retenue (21) présente une forme trapézoïdale et creuse et est disposé au centre dans le corps tubulaire de mesure (1).

10. Dispositif de mesure du débit volumétrique selon les revendications 1, 6 et 8, **caractérisé en ce que** le corps de retenue est formé comme une sphère creuse et est disposé au centre dans le corps tubulaire de mesure (1).

11. Dispositif de mesure du débit volumétrique selon les revendications 1, 6 et 8, **caractérisé en ce que** le corps de retenue est formé comme un ellipsoïde creux et est disposé au centre dans le corps tubulaire de mesure (1).

12. Dispositif de mesure du débit volumétrique selon les revendications 1, 6 et 8, **caractérisé en ce que** le corps de retenue est réalisé comme une surface porteuse creuse dans le corps tubulaire de mesure (1).

13. Dispositif de mesure du débit volumétrique selon l'une des revendications 9 à 12, **caractérisé en ce que** les orifices de prise de pression (23) sont disposés latéralement dans la paroi du corps de retenue creux (21).

14. Dispositif de mesure du débit volumétrique selon l'une des revendications précédentes, **caractérisé en ce qu'**il se compose de matière plastique en particulier d'un polypropylène difficilement inflammable.

15. Dispositif de mesure du débit volumétrique selon l'une des revendications 1 à 13, **caractérisé en ce qu'**il se compose d'acier zingué.

16. Dispositif de mesure du débit volumétrique selon les revendications 1 à 13, **caractérisé en ce qu'**il se compose de V4A.

17. Régulateur de débit volumétrique muni d'un dispositif de mesure du débit volumétrique selon l'une des revendications précédentes dans un groupe de composants dans lequel un corps tubulaire de volet obturateur (4) se raccorde au corps tubulaire de mesure (1) dans le sens d'écoulement en particulier dans le même axe,
un volet obturateur (12) étant logé dans le corps tubulaire de volet obturateur (4), il est logé et
un actionneur du volet obturateur (12) étant commandable par une unité de réglage, dont l'entrée est reliée par un convertisseur de pression différentiel aux orifices de prise de pression (8, 9, 16, 20, 23) de la prise de pression plus et de la prise de pression moins afin de transférer les signaux.
